# EUROPEAN PATENT APPLICATION

(11) **EP 1 887 365 A2**
(43) Date of publication of application: **13.02.2008**
(21) Application number: 07015505.6
(22) Date of filing: 07.08.2007
(51) Int. Cl.: G01P 15/12, G01P 15/18

(54) **Multi-range three-axis acceleration sensor device**

(30) Priority: 09.08.2006 JP 2006216533; 15.09.2006 JP 2006251006
(71) Applicant: HITACHI METALS, LTD., Minato-ku, Tokyo 105-8614 (JP)
(72) Inventor: Kazama, Atsushi, Mohka 321-4300 (JP); Okada, Ryoji, Kasumigaura 315-0052 (JP); Saitoh, Masakatsu, Yokohama 240-0026 (JP); Sugimoto, Masakazu, Matsudo 271-0075 (JP)
(74) Representative: Beetz & Partner

(57) **Abstract**

Disclosed is a multi-range three-axis acceleration sensor device (100a) in which a plurality of three-axis acceleration sensor elements (50a, 50a') are formed without axial deviation among them in a single silicon chip (40a) and have different acceleration measurement ranges. Each of the plurality of sensor elements (50a, 50a') includes a weight (51a, 51a'), a frame (52a, 52a') surrounding the weight and flexible members (53a, 54a; 53a', 54a') composed of beams or diaphragm connecting the weight with the frame. Each of the plurality of sensor elements causes different output voltage for unit acceleration from another. A first three-axis acceleration sensor element (50a) among the plurality of sensor elements (50a, 50a') has other sensor elements of them formed in a frame of the first one and causes a larger output voltage for unit acceleration than the others (50a').

## Description

### BACKGROUND OF THE INVENTION

### 1. Field of the Invention

The present invention relates to a semiconductor acceleration sensor for acceleration detection used in portable terminal apparatuses, toys, automobiles, airplanes, and the like.

### 2. Description of the Related Art

Acceleration sensors are often used for actuation of an airbag of an automobile and grasp an impact of collision of the automobile as acceleration. Since acceleration in an X axis direction and/or acceleration in a Y axis direction is measured in the automobile, a one-axis or two-axis function is enough. Since acceleration measured is extremely large, an acceleration sensor element that detects acceleration is manufactured robustly. Recently, acceleration sensors are often used in portable terminal apparatuses and robots. In order to detect movements in a three-dimensional space, a three-axis acceleration sensor that can measure accelerations in an X axis direction, a Y axis direction, and a Z axis direction is demanded. In these applications, it is requested that the acceleration sensors can detect acceleration as small as several G to several tens G and have high resolution.

The acceleration sensors are roughly classified into a beam type and a diaphragm type according to a structure of a flexible member that is deformed by acceleration applied thereto. The acceleration sensors are also roughly classified into a piezo resistance type and a static capacitance type according to a displacement detection system.

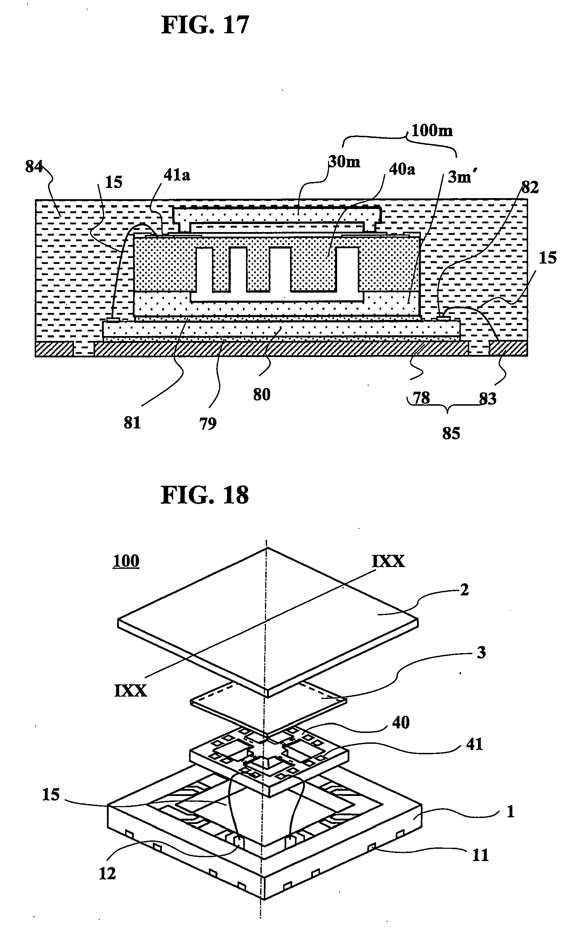

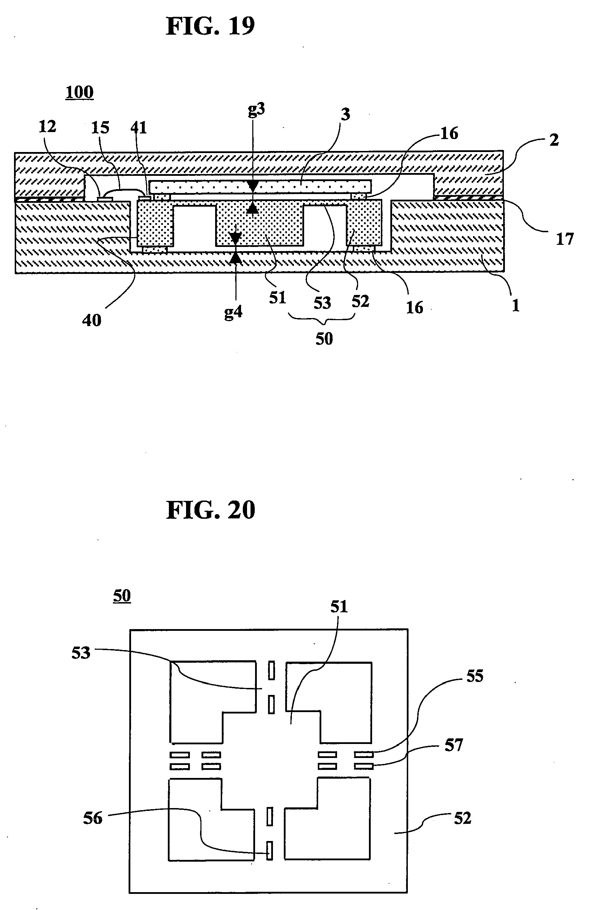

The applicant has filed many applications concerning piezo resistance type three-axis acceleration sensors of the beam type. In Japanese Patent Laid-Open No. 2003-172745, Japanese Patent Laid-Open No. 2003-279592, Japanese Patent Laid-Open No. 2004-184373, Japanese Patent Laid-Open No. 2006-098323, Japanese Patent Laid-Open No. 2006-098321, and International Publication No. WO2005/062060 A1, the applicant clarifies the shape of a weight, the shape of a beam, the arrangement of piezo resistors, the connection of the piezo resistors, the shape of the joint portion of the beam and a frame, and the like. An exploded perspective view of a three-axis acceleration sensor is shown in FIG. 18, a cross-sectional view taken along the line IXX-IXX in FIG. 18 is shown in FIG. 19, and a plan view of a sensor chip is shown in FIG. 20. In a three-axis acceleration sensor 100, a regulating plate 3 is fixed in a case 1 by an adhesive 16 such as resin at a predetermined space apart from a sensor chip 40. Chip terminals 41 of the sensor chip 40 are connected to case terminals 12 by lead wires 15 to extract signals of the sensor from external terminals 11. A case cover 2 is fixed to the case 1 by an adhesive 17 such as AuSn solder and seals the case 1. A beam-type three-axis acceleration sensor element 50 is formed in the sensor chip 40. The beam-type three-axis acceleration sensor element 50 includes a square frame 52, a weight 51, and beams 53. The weight 51 is held in the center of the frame 52 by two pairs of beams 53. Piezo resistors are provided in the beams 53. An X axis piezo resistor 55 and Z axis piezo resistor 57 are provided in one pair of beams and a Y axis piezo resistor 56 is provided in the other pair of beams. In FIG. 19, when excess acceleration such as an impact is applied to the sensor, the movement of the weight 51 is regulated to a gap g4 between a lower surface of the weight 51 and an inner bottom surface of the case 1 and a gap g3 between an upper surface of the weight 51 and the regulating plate 3 to prevent breakage of the beams 53. The basic structure of a beam-type three-axis acceleration sensor element used in the present invention is the same as those disclosed in these patent documents. Detailed explanations of the beam-type three-axis acceleration sensor element are omitted unless specifically otherwise noted.

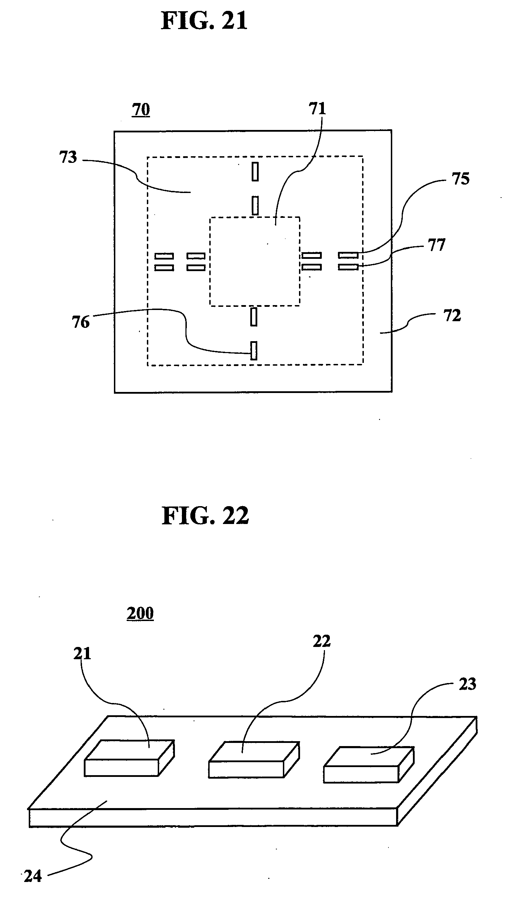

The diaphragm structure of a diaphragm-type three-axis acceleration sensor element and the arrangement of piezo resistors are disclosed in Japanese Patent Laid-Open No. 3-2535, Japanese Patent Laid-Open No. 6-174571, and Japanese Patent Laid-Open No. 7-191053. An outer edge of a circular or polygonal diaphragm is supported by a frame and a weight is arranged in the center of the diaphragm. When the weight is displaced by an external force, piezo resistors provided in the diaphragm are deformed and an electric signal is obtained. Compared with the beam-type three-axis acceleration sensor element, a degree of freedom of arrangement of the piezo resistors is high in the diaphragm-type three-axis acceleration sensor element. A plan view of a diaphragm-type three-axis acceleration sensor element 70 is shown in FIG. 21. The diaphragm-type three-axis acceleration sensor element 70 includes a square frame 72, a weight 71, and a diaphragm 73 as a flexible member. The weight 71 is held in the center of the diaphragm 73. An X axis piezo resistor 75, a Y axis piezo resistor 76, and Z axis piezo resistor 77 are provided in the diaphragm 73. Basic structures of a diaphragm-type piezo-resistor-type three-axis acceleration sensor element and a diaphragm-type three-axis acceleration sensor element are substantially the same as those disclosed in these patent documents. Thus, detailed explanations of the three-axis acceleration sensor elements are omitted unless specifically otherwise noted.

Acceleration applied to by the fall of a portable small-sized apparatus and acceleration applied to a user interface and the like are on the order of several G. However, acceleration of an impact is several hundred to several thousand G. For example, in a portable apparatus having a magnetic disk built therein, to prevent the magnetic disk from being broken by the impact of the fall, a magnetic head is retracted when the fall is detected. Acceleration is measured to prevent the breakage at the time of the impact. In addition, when damaged products are repaired, a history of the impact on the product is requested. The applicant also clarifies in Japanese Patent Laid-Open No. 2005-241503 about a method of efficiently recording a history of impact acceleration in combination with fall detection. In this way, it is requested to perform the fall detection in the order of several G and the impact detection in the order of several hundred to several thousand G for one product. It is difficult to highly accurately obtain acceleration from several G and acceleration of several hundred to several thousand G with one acceleration sensor. When acceleration of several G is detected by an acceleration sensor that measures acceleration from several hundred to several thousand G, resolution (accuracy) of detection is not obtained.

Since it is difficult to detect large acceleration from several hundred to several thousand G and acceleration of about several G with the same resolution, it is necessary to separately prepare an acceleration sensor that measures from several hundred to several thousand G and an acceleration sensor that measures several G. FIG. 22 is an acceleration sensor device 200 that has acceleration sensors 21, 22, and 23 having measurement ranges of several G, several tens G, and several hundred G, respectively, mounted on a circuit board 24 and can measure acceleration from several G to several hundred G with high resolution. Since the three acceleration sensors are used, a price of the acceleration sensor device is several times as higher as the acceleration sensor. Moreover, it is difficult to reduce a size thereof.

In the acceleration sensor device 200 in which the plural acceleration sensors are used, it is extremely difficult to match detection axes among the acceleration sensors. When the acceleration sensors are connected to the circuit board by solder, it is difficult to reduce angular deviation of detection axes of acceleration sensor elements among the acceleration sensors to substantially zero. Even if the acceleration sensors are assembled with outer sides thereof as the reference, the outer sides and axes of the acceleration sensor elements need to match each other. When there is angular deviation of the detection axes among the acceleration sensors, for example, a measurement value of the acceleration sensor of several G and a measurement value of the acceleration sensor of several tens G cannot be measured as acceleration in the same axis direction.

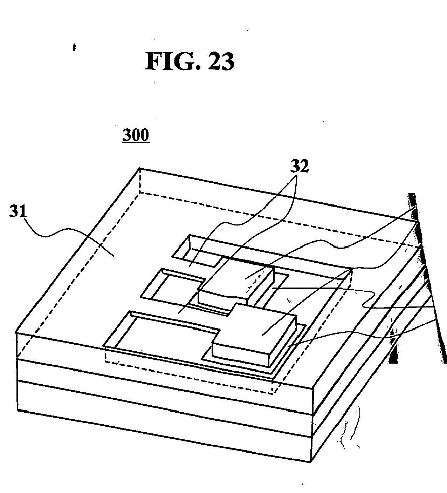

A multi-range acceleration sensor that can realize small size and low price and eliminate angular deviation of detection axes is disclosed in Japanese Patent Laid-Open No. 8-136574. The structure of the multi-range acceleration sensor is shown in FIG. 23. A multi-range acceleration sensor device 300 has the structure in which two or more sensor elements are provided in a frame 31. One end of beams 32 of the sensor elements is connected to the frame 31 and the other end is connected to weights 33. The beams 32 have the structure of a cantilever having connection points with the frame 31 as fulcrums and the weights 33 as power points. The movement of the weights 33 is measured according to a change in a static capacitance between the weights 33 and electrodes 34 arranged at a predetermined interval from the weights 33 to detect acceleration. The sensor elements determine, by changing the length of the beams and the weight of the weights, the range of acceleration measured.

In the acceleration sensor disclosed in Japanese Patent Laid-Open No. 8-136574, the sensor elements having a different measurement range are formed on one chip. Thus, it is possible to eliminate deviation of axes among the sensor elements. Although axial deviation occurs because of errors of a photo-mask for photolithography and at the time of photolithograph, it is possible to almost neglect the axial deviation. However, since the acceleration sensor is a one-axis sensor element, to measure accelerations of three axes, it is necessary to arrange three sensor elements in positions shifted 90 degrees from one another. It is extremely difficult to accurately arrange the three sensor elements with respect to X, Y, and Z axes. Since it is necessary to combine the three sensor elements, it is difficult to reduce a size of the acceleration sensor. The multi-range three-axis acceleration sensor device obtained by using the multi-range one-axis acceleration sensor is not substantially different from the conventional acceleration sensor device shown in FIG. 22 in terms of the number of acceleration sensors, a price, and a size.

In the acceleration sensor structure described in the patent document, since it is likely that the sensor elements interfere with one another, measures against the interference is necessary. Since the plural beams 32 are formed on one side of the frame 31, the movement of one sensor element tends to affect the measurement of another sensor element. To prevent the other sensor elements and the weights 33 from interfering with each other when acceleration is applied in the axis direction of the beams 32, it is necessary to provide space among the sensor elements.

### SUMMARY OF THE INVENTION

An object of the present invention provides at a low cost a small-sized multi-range three-axis acceleration sensor device with high precision, in which a plurality of sensor elements with different acceleration measurement ranges are formed in a chip and do not have axial deviation among them.

A multi-range three-axis acceleration sensor device according to the present invention has a plurality of three-axis acceleration sensor elements formed in a single silicon chip. Each of the plurality of three-axis acceleration sensor elements comprises a weight, a frame surrounding the weight and having frame sides opposite to each other, flexible members thinner than the weight and the frame, which members connect upper portions of the opposite frame sides with an upper portion of the weight to support the weight between the upper portions of the opposite frame sides, and piezo resistors disposed on an upper surface of the flexible members to measure accelerations in two orthogonal axis directions in the upper surface of the flexible members and acceleration in a direction vertical to the upper surface of the flexible members. The plurality of three-axis acceleration sensor elements include a first three-axis acceleration sensor element, in the frame of which other three-axis acceleration sensor elements are provided. Each of the plurality of three-axis acceleration sensor elements causes output voltage for unit acceleration different from another, and the output voltage for unit acceleration from the first three-axis acceleration sensor element is larger than output voltage for unit acceleration from another.

The plural three-axis acceleration sensor elements included in the multi-range three-axis acceleration sensor device according to the present invention are formed on the single silicon chip. Thus, it is possible to simultaneously manufacture plural acceleration sensor elements with photolithography and etching by forming patterns of the respective elements on a photo-mask in advance. Acceleration acts on weights of the plural three-axis acceleration sensor elements, the flexible members are deformed, stress is generated in the piezo resistors formed on the flexible members, an electric resistance changes, and the change in the electric resistance is converted into a potential difference (an output voltage) and outputted.

The other three-axis acceleration sensor elements are provided on the frame of the first three-axis acceleration sensor element among the plural three-axis acceleration sensor elements. In other words, since the other three-axis acceleration sensor elements are fit within the frame of the first three-axis acceleration sensor element, the other three-axis acceleration sensor elements are smaller than the first three-axis acceleration sensor element. The overall size of the plural three-axis acceleration sensor element is the same as the size of the first three-axis acceleration sensor element.

By forming the other three-axis acceleration sensor elements within the frame of the first three-axis acceleration sensor element, since the plural three-axis acceleration sensor elements share the frame, it is possible to arrange the three-axis acceleration sensor elements of plural ranges in a small area. The three-axis acceleration sensor elements are separated from one another by the frames thereof. Thus, oscillation of each of the three-axis acceleration sensor elements does not affect the other three-axis acceleration sensor elements. The weight of the three-axis acceleration sensor element does not interfere with the weights of the other acceleration sensor elements.

The plural three-axis acceleration sensor elements have different output voltages per unit acceleration one another. An output voltage per unit acceleration of the first three-axis acceleration sensor element is larger than output voltages per unit acceleration of the other three-axis acceleration sensor elements.

For example, when an output voltage per unit acceleration (1 G) of the first three-axis acceleration sensor element having a measurement range of ±3 G is 1 V and a measurement range of the other three-axis acceleration sensor elements is 300 G, by setting an output voltage per unit acceleration of the other three-axis acceleration sensor elements to 0.01 V, it is possible to adjust a full range of an output voltage corresponding to the measurement ranges of the respective three-axis acceleration sensor elements to ±3 V. If the respective three-axis acceleration sensor elements detect ±3 V with the same resolution, highly accurate acceleration detection is possible in the three-axis acceleration sensor elements with the different acceleration ranges.

Outputs per unit acceleration of the respective acceleration sensor elements are set to be in an area in which output voltages keep linearity in the measurement ranges. When an output voltage per unit acceleration is set too high in a sensor element with a wide measurement range, it is likely that deformation of a flexible member reaches a nonlinear area in the measurement range and linearity of the output voltage is not kept.

Since the plural three-axis acceleration sensor elements are formed on an identical chip plane, it is easily possible to highly accurately match a detection axis (a Z axis) in a direction perpendicular to the chip plane. Moreover, it is also possible to highly accurately match two detection axes (X and Y axes) in the chip plane in accordance with mask accuracy of photolithograph.

Regulating plates are arranged above and below a multi-range sensor chip. When acceleration exceeding a measurement range is applied, the movement of the weights is regulated by the regulating plates. Thus, it is possible to prevent breakage of the flexible members and realize a multi-range three-axis acceleration sensor device having high reliability.

The upper and lower regulating plates are desirably made of a material having a coefficient of thermal expansion close to the multi-range sensor chip. It is possible to use materials such as glass, silicon, ceramics, and FeNi alloy. The regulating plates are bonded to the sensor elements using an adhesive or metal joining so as to form gaps between the regulating plates and the three-axis acceleration sensors.

It is possible to use an IC chip having a detection circuit as the upper regulating plate. It is possible to set the multi-range three-axis acceleration sensor device in a case, store the case in a package covered at the top, and use an inner bottom of the case as the lower regulating plate.

It is desirable in terms of easiness of manufacturing to set intervals between the weights and the regulating plates of all the three-axis acceleration sensor elements the same because the regulating plates are made flat. In that case, for all the three-axis acceleration sensor elements, the intervals between the three-axis acceleration sensor elements and the regulating plates are set to intervals for preventing the weights from colliding with the regulating plates in the measurement range and the flexible members from being broken before the weights collide with the regulating plates. When more importance is attached to reliability, the regulating plates are arranged such that, as the measurement range is larger, the intervals between the weights and the regulating plates are narrower. This is realized by, for example, providing cavities with different depths in the regulating plates. Concerning several three-axis acceleration sensor elements having larger measurement ranges, when it is unlikely that the flexible members are broken at acceleration assumed to be applied, it is unnecessary to provide the regulating plates above and below the sensor elements.

In the multi-range three-axis acceleration sensor according to the present invention, it is preferable that a three-axis acceleration sensor element having a larger output voltage per unit acceleration has a larger distance between frame sides opposed to each other. Since the first three-axis acceleration sensor element has an output voltage per unit acceleration larger than those of the other three-axis acceleration sensor elements, the first three-axis acceleration sensor element has a distance between frame sides opposed to each other larger than those of the other three-axis acceleration sensor elements. When the three-axis acceleration sensor element has a larger distance between frame sides opposed to each other and acceleration of the same magnitude is applied thereto, the flexible members are deformed more largely. Thus, deformation of the piezo resistors provided in the flexible members is larger and an output voltage is increased.

The plural three-axis acceleration sensor elements included in the multi-range three-axis acceleration sensor device according to the present invention can include, as the flexible members, diaphragms that are provided in areas surrounded by plural beams connecting upper portions of the frame sides and upper portions of the weights opposed to each other or surrounded by upper portions of the frames and support the weights in the center thereof.

In the multi-range three-axis acceleration sensor device according to the present invention, at least one of the plural three-axis acceleration sensor elements can include, as the flexible members, plural beams connecting upper portions of the frame sides and upper portions of the weights opposed to each other and the remaining three-axis acceleration sensor elements can include, as the flexible members, diaphragms that are provided in areas surrounded by upper portions of the frames and support the weights in the center thereof.

When the three-axis acceleration sensor element has the beams, the three-axis acceleration sensor element can include two sets of a pair of beams extending in two orthogonal directions within an upper surface of the element.

When the three-axis acceleration sensor element has the diaphragms, the diaphragms are provided in the entire area surrounded by the upper portion of the frame and the weights can be provided in the center of the diaphragms.

In the multi-range three-axis acceleration sensor device according to the present invention, the first three-axis acceleration sensor element can include, as the flexible member, plural beams connecting upper portions of the frame sides and upper portions of the weights opposed to each other.

In the multi-range three-axis acceleration sensor device according to the present invention, each of the plural three-axis acceleration sensor elements can include, as the flexible member, plural beams connecting upper portions of the frame sides and upper portions of the weights opposed to each other.

In the multi-range three-axis acceleration sensor device according to the present invention, the first three-axis acceleration sensor element can include, as the flexible member, diaphragms that are provide in an area surrounded by an upper portion the frame and supports the weights in the center thereof.

In the multi-range three-axis acceleration sensor device according to the present invention, each of the plural three-axis acceleration sensor elements can include, as the flexible member, diaphragms that are provide in an area surrounded by an upper portion the frame and supports the weights in the center thereof.

It is possible to determine, according to a measurement range of acceleration, an external dimension of sensor elements, easiness of manufacturing, and the like, which of the diaphragm-type three-axis acceleration sensor element and the beam-type three-axis acceleration sensor element should be used. It is possible to adopt the combination in which a first sensor element is the diaphragm type, a second sensor element smaller than the first sensor element is the beam type, and a third sensor element smaller than the second sensor element is the diaphragm type. Alternatively, the first sensor element may be the beam type and the second and third sensor elements may be the diaphragm type. In the beam-type three-axis acceleration sensor element, a thin silicon layer is etched to form beams. Machining processes are increased for beam-like flexible members. However, compared with diaphragm-like flexible members not machined used in the diaphragm-type three-axis acceleration sensor elements, it is possible to reduce bending rigidity of the beams and increase an output per unit acceleration. By applying the beam type to the first three-axis acceleration sensor element, it is possible to reduce a size of the first three-axis acceleration sensor element and reduce a size of the entire multi-range acceleration sensor chip. In the present invention, the diaphragm-type three-axis acceleration sensor element and the beam-type three-axis acceleration sensor element are collectively referred to as three-axis acceleration sensor element unless specifically otherwise noted.

In the multi-range three-axis acceleration sensor device according to the present invention, it is preferable that the thicknesses of the flexible members of all the three-axis acceleration sensor elements are the same.

It is desirable that the multi-range three-axis acceleration sensor device according to the present invention is formed of an SOI (Silicon on Insulator) substrate formed by laminating a thin silicon layer and a thick silicon layer via a silicon oxide film layer. The thick silicon layer is machined to form weights. In the portion from which the silicon layer is removed by machining, the thin silicon layer remains and flexible members are formed. In the present invention, when the thicknesses of the flexible members of all the three-axis acceleration sensor elements are set the same, it is unnecessary to form flexible members having different thicknesses in the thin silicon layer. Thus, it is possible to collectively form the flexible members of all the three-axis acceleration sensor elements using the thickness of the thin silicon layer as it is. It is possible to reduce manufacturing man-hour and manufacture the three-axis acceleration sensor elements at low cost.

In the multi-range three-axis acceleration sensor device according to the present invention, it is preferable that the thicknesses of the weights of all the three-axis acceleration sensor elements are the same.

In the multi-range three-axis acceleration sensor device according to the present invention, it is preferable that the thicknesses of the weights and the frame of all the three-axis acceleration sensor elements are the same.

By setting the thicknesses of the frame and the weights as well as the flexible members the same in all the three-axis acceleration sensor elements, it is possible to collectively form the weights of all the three-axis acceleration sensor elements in one etching using the thickness of the thick silicon layer as it is. Consequently, it is possible to reduce manufacturing man-hour and manufacture the three-axis-acceleration sensor elements at low cost.

Since positions of lower surfaces of the frame and the weights are aligned in an identical plane, it is easily possible to arrange, in at least three places of the frame, the multi-range acceleration sensor chips and the lower regulating plate via spacers having the same height and set intervals between the lower plane of the weights and the lower regulating plates identical the same in all the three-axis acceleration sensor elements.

It is preferable that in the multi-range three-axis acceleration sensor device according to the present invention, the three-axis acceleration sensor element having a larger output voltage per unit acceleration has weights of a larger mass.

When a mass of the weights is reduced, since a force acting on the weights because of the unit acceleration increases, it is possible to increase the output voltage per unit acceleration. In the multi-range three-axis acceleration sensor device according to the present invention, it is desirable to set the thicknesses of the weights the same as described above. Thus, it is desirable to increase or reduce the mass of the weights by changing dimensions thereof in the chip plane.

In the multi-range three-axis acceleration sensor device according to the present invention, it is preferable that the three-axis acceleration sensor element having a larger output voltage per unit acceleration has a larger distance between frame sides opposed to each other.

When the distance between the weights and the frame is increased, the bending rigidity of the flexible members connecting the weights and the frame decreases and stress generated in the flexible member by unit acceleration increases. Thus, it is possible to increase the output voltage per unit acceleration.

In the multi-range three-axis acceleration sensor device according to the present invention, it is preferable that the three-axis acceleration sensor element having a larger output voltage per unit acceleration has a larger area surrounded by the connecting portions of the flexible members and the frame.

The area surrounded by the connecting portions of the flexible members and the frames is dimensions of an inner area of the frame, in other words, dimensions occupied by the three-dimensional acceleration element in the chip plane. As the dimensions are larger, it is possible to set dimensions of the weights larger. Since the distance between the weights and the frame increases, the force acting on the weights increases and the bending rigidity of the flexible members decreases. Thus, it is possible to increase the output voltage per unit acceleration.

In the multi-range three-axis acceleration sensor device of the present invention, at least one of the other three-axis acceleration sensor elements may be composed of two two-axis acceleration sensor elements, each of which comprises a weight, a frame surrounding the weight and having frame sides opposite to each other, a pair of beams thinner than the weight and the frame, and piezo resistors formed on the beams and extending in a direction of the beams extending. The directions of the beams extending of the two two-axis acceleration sensor elements are perpendicular to each other in an upper surface of the beams, one of the two two-axis acceleration sensor elements measures acceleration in the direction of the beams extending in the upper surface of the beams and acceleration vertical to the upper surface of the beams, and the other of the two two-axis acceleration sensor elements measures at least acceleration in the direction of the beams extending in the upper surface of the beams.

The beam-type two-axis acceleration sensor element has a smaller bending rigidity of the entire beams compared with the beam-type three-axis acceleration sensor element having the two sets of beam pairs. Thus, to obtain the same output, it is possible to reduce a size of the weights. It is possible to reduce dimensions in a direction in which the beam pairs are not provided. For example, when the beam-type two-axis acceleration sensor elements are arranged around the first three-axis acceleration sensor element having largest external dimensions, it is possible to reduce dimensions of the multi-range acceleration sensor chip.

In the multi-range three-axis acceleration sensor device according to the present invention, it is preferable that the thicknesses of the beams of all the beam-type two-axis acceleration sensor elements and the diaphragms of all the three-axis acceleration sensor elements are the same.

When the thicknesses of the beams of all the beam-type two-axis acceleration sensor elements and the diaphragms of all the three-axis acceleration sensor elements are the same, since it is unnecessary to form diaphragms having different thicknesses in the thin silicon layer, it is possible to collectively form the flexible members of all the two-axis and three-axis acceleration sensor elements using the thickness of the thin silicon layer as it is. Thus, it is possible to reduce manufacturing man-hour and manufacture the two-axis and three-axis acceleration sensor elements at low cost.

In the multi-range three-axis acceleration sensor device according to the present invention, it is preferable that the thicknesses of the weights of all the beam-type two-axis acceleration sensor elements and all the three-axis acceleration sensor elements are the same.

By setting the thicknesses of the frames and the weights as well as the flexible members the same in all the beam-type two-axis acceleration sensor elements and the three-axis acceleration sensor elements, it is possible to collectively form the weights of all the beam-type two-axis acceleration sensor elements and all the three-axis acceleration sensor elements in one etching using the thickness of the thick silicon layer as it is. Consequently, it is possible to reduce manufacturing man-hour and manufacture the two-axis and three-axis acceleration sensor elements at low cost.

According to the multi-range three-axis acceleration sensor device according to the present invention, it is possible to collectively form the plural three-axis acceleration sensor elements on an identical chip. Thus, a separate machining process is not necessary for each element and the frame can be shared. Therefore, it is possible to provide, in a small size and at low cost, the multi-range three-axis acceleration sensor device capable of detecting three-axis acceleration in plural ranges.

### BRIEF DESCRIPTION OF THE DRAWINGS

FIG. 1 is an exploded perspective view of a multi-range three-axis acceleration sensor device of EXAMPLE 1 of the present invention.

FIG. 2 is a perspective view of a multi-range sensor chip used in the multi-range three-axis acceleration sensor device of EXAMPLE 1.

FIG. 3 is a cross-sectional view taken along the line III-III of FIG. 1.

FIG. 4 is an exploded perspective view of a multi-range three-axis acceleration sensor device of EXAMPLE 2 of the present invention.

FIG. 5 is a perspective view of a multi-range sensor chip used in the multi-range three-axis acceleration sensor device of EXAMPLE 2.

FIG. 6 is a cross-sectional view taken along the line VI-VI of FIG. 4.

FIG. 7 is a perspective view of a multi-range sensor chip in use for a multi-range three-axis acceleration sensor device of EXAMPLE 3.

FIG. 8 is a perspective view of a multi-range sensor chip in use for a multi-range three-axis acceleration sensor device of EXAMPLE 4.

FIG. 9 is a perspective view of a multi-range sensor chip in use for a multi-range three-axis acceleration sensor device of EXAMPLE 5.

FIG. 10 is a perspective view of a multi-range sensor chip in use for a multi-range three-axis acceleration sensor device of EXAMPLE 6.

FIG. 11 is a perspective view of a multi-range sensor chip in use for a multi-range three-axis acceleration sensor device of EXAMPLE 7.

FIG. 12 is a perspective view of a multi-range sensor chip in use for a multi-range three-axis acceleration sensor device of EXAMPLE 8.

FIG. 13 is a perspective view of a multi-range sensor chip in use for a multi-range three-axis acceleration sensor device of EXAMPLE 9.

FIG. 14 is a perspective view of a multi-range sensor chip in use for a multi-range three-axis acceleration sensor device of EXAMPLE 10.

FIG. 15 is a perspective view of a multi-range sensor chip in use for a multi-range three-axis acceleration sensor device of EXAMPLE 11.

FIG. 16 is a cross-sectional view showing a wafer level package in a multi-range three-axis acceleration sensor device of EXAMPLE 12.

FIG. 17 is a cross-sectional view of the multi-range three-axis acceleration sensor device of EXAMPLE 12.

FIG. 18 is an exploded perspective view of a conventional three-axis acceleration sensor device.

**FIG. 19** is a cross-sectional view taken along the line IXX-IXX of FIG. 18.

FIG. 20 is a plan view of a beam-type sensor chip used in the three-axis acceleration sensor device shown in FIG. 18.

FIG. 21 is a plan view of a diaphragm-type sensor chip used in a conventional three-axis acceleration sensor device.

FIG. 22 is a perspective view showing a conventional multi-range acceleration sensor device.

FIG. 23 is a perspective view showing another conventional multi-range acceleration sensor device.

### DETAILED DESCRIPTION OF THE PREFERRED EMBODIMENTS

The present invention will be hereinafter explained in detail with reference to the drawings on the basis of examples.

### EXAMPLE 1

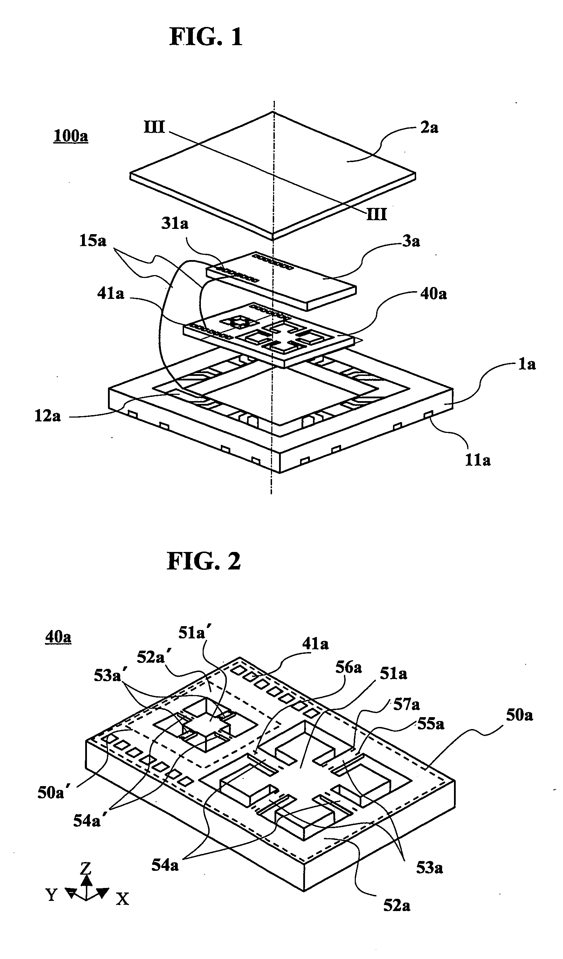

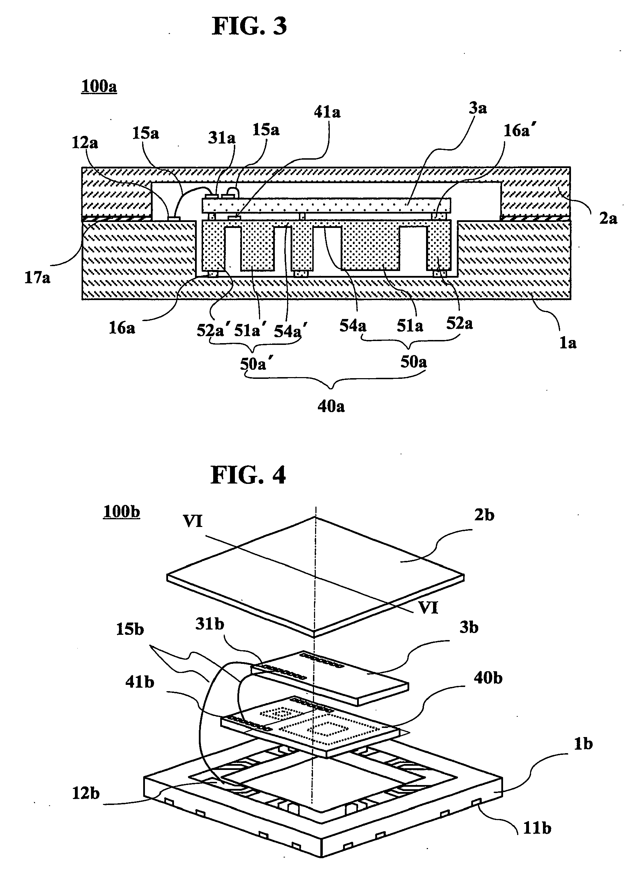

A multi-range three-axis acceleration sensor device according to EXAMPLE 1 of the present invention will be hereinafter explained using FIGS. 1 to 3. FIG. 1 is an exploded perspective view of the multi-range three-axis acceleration sensor device, FIG. 2 is an enlarge view of a multi-range sensor chip used in the multi-range three-axis acceleration sensor device, and FIG. 3 is a cross-sectional view taken along the line III-III. In FIG. 1, a multi-range three-axis acceleration sensor device 100a has the structure in which a multi-range sensor chip 40a having sensor elements formed thereon and an IC regulating plate 3a having a detection circuit formed thereon and having a role for regulating the movement of the sensor elements are set in a case 1a of alumina and sealed by a case cover 2a of alumina. Chip terminals 41a of the multi-range sensor chips 40a and IC terminals 31a of the IC regulating plate 3a as well as case terminals 12a connected to external terminals 11a of the case 1a and the IC terminals 31a are connected by lead wires 15a. Detection signals of the sensor are extracted from the external terminal 11a.

As shown in FIG. 3, the multi-range sensor chip 40a is fixed to an inner bottom of the case 1a using a first adhesive 16a. The first adhesive 16a is mixed with plastic balls. A certain space is formed between weights of the sensor elements and the inner bottom of the case 1a. The IC regulating plate 3a is bonded onto the multi-range sensor chip 40a by an adhesive 16a' also mixed with plastic balls. A certain space is formed between the weights of the sensor elements and the IC regulating plate 3a. The case cover 2a is bonded to the case 1a by a second adhesive 17a to seal the case 1a, thereby forming the multi-range three-axis acceleration sensor device 100a.

The structure of the multi-range sensor chip 40a will be explained using FIG. 2. A first three-axis acceleration sensor element 50a and a second three-axis acceleration sensor element 50a' are formed on the multi-range sensor chip 40a. In the first three-axis acceleration sensor element 50a, a first element weight 51a is supported in a first element frame 52a by a first element first beam 53a and a first element second beam 54a of respective two beams. When an X axis and a Y axis are set in an upper surface of the multi-range sensor chip 40a and a Z axis is set in a direction perpendicular to the upper surface, X axis piezo resistors 55a for X axis direction acceleration detection are formed on the first element first beam 53a formed along the X axis and Y axis piezo resistors 56a for Y axis direction acceleration detection are formed on the first element second beam 54a formed along the Y axis. Z axis piezo resistors 57a for Z axis acceleration detection may be formed on any of the beams. However, here, the Z axis piezo resistors 57a are formed on the first element first beam 53a. Four piezo resistors are provided for each of the axes and are connected by not-shown wiring to form a bridge circuit. The weights are displaced by a force applied by acceleration and the beams are deformed, whereby an electric resistance of the piezo resistors changes. It is possible to detect the acceleration by extracting a potential difference due to the difference in the amount of resistance change among the four piezo resistors using the bridge circuit.

Similarly, in the second three-axis acceleration sensor element 50', a second element weight 51a' is supported in a second element frame 52' by a second element first beam 53a' and a second element second beam 54a' of respective two beams. X axis piezo resistors and Z axis piezo resistors are formed on the second element first beam 53a' along the X axis. Y axis piezo resistors are formed on the second element second beam 54a' along the Y axis.

The second three-axis acceleration sensor element 50a' has a small output voltage per unit acceleration compared with the first three-axis acceleration sensor element 50a. In other words, the second three-axis acceleration sensor element 50a' was set in a wider measurement range with respect to a full scale of an output voltage. For example, it is possible to set a measurement range of the first three-axis acceleration sensor element 50a to ± several G and use the first three-axis acceleration sensor element 50a for fall detection and set a measurement range of the second three-axis acceleration sensor element 50a' to ± several hundred G and use the second three-axis acceleration sensor element 50a' for impact detection. Plural chip terminals 41a are formed on the multi-range sensor chip 40a.

A manufacturing method and dimensions of the acceleration sensor elements will be briefly explained. An SOI (Silicon on Insulator) wafer including a silicon oxide layer having the thickness of several µm and a silicon layer having the thickness of 6 µm was used as a silicon plate having the thickness of about 400 µm. Patterning was performed by a photoresist and boron of 1 to 3 × 10¹⁸ atom/cm³ was driven into the silicon layer to form a piezo resistor. Wiring connected to the piezo resistor was formed using a metal sputter and a dry etching device. The silicon layer and the silicon plate were machined using photolithography and the dry etching device. Beams were formed in the silicon layer and weights were formed over the silicon layer and the silicon plate. The silicon oxide layer functions as an etching stopper when dry etching of silicon is performed. A large number of chips were manufactured on one wafer and separated into single chips by dry etching or dicing.

In the multi-range three-axis acceleration sensor device according to this example, it is possible to collectively form the first three-axis acceleration sensor element 50a and the second three-axis acceleration sensor element 50a' on one multi-range sensor chip 40a. Shapes of both the sensor elements are created on a mask for silicon dry etching to simultaneously machine and form the sensor elements. In this way, it is possible to from the two sensor elements having different measurement ranges without the addition of processes and it is possible to reduce manufacturing cost. Since the second three-axis acceleration sensor element 50a' is formed on one of four frame sides forming the frame 52a of the first three-axis acceleration sensor element 50a, it is possible to commonly use frames of the two sensor elements and fit the sensor elements in a small area. Thus, it is possible to reduce a size of the multi-range three-axis acceleration sensor device. Further, since it is possible to adjust directions of the beams of the two sensor elements using mask patterns, it is possible to cause acceleration detection axes of the two sensor elements to highly accurately coincide with each other.

Schematic dimensions of the multi-range sensor chip 40a according to EXAMPLE 1 will be explained. In the first three-axis acceleration sensor element 50a, the length of one beam was set to 400 µm, the width thereof is set to 40 µm, and an external dimension of the weight was set to 900 µm×900 µm. In order to fit the weight and the beams in a small area, the weight was formed in a shape obtained by hollowing connecting portions of the beams. Consequently, the weight was formed in a clover shape as shown in FIG. 2. In the second three-axis acceleration sensor element 50a', the length of one beam was set to 120 µm, the width thereof was set to 100 µm, and an external dimension of the weight was set to 200 µm×200 µm. In the second three-axis acceleration sensor element, since an effect of reducing an area by forming the weight in the clover shape was small, the weight was formed in a square shape. The thickness of the beams was 6 µm, which was the thickness of the silicon layer of the SOI wafer, for both the two sensor elements. The thickness of the weights was the thickness of the overall SOI wafer for both the two sensor elements. Since the silicon oxide film layer was 1 µm thick, the thickness of the beams was 407 µm.

The output voltage per acceleration 1 G at the input voltage of 3 V was about 2.0 mV on all the X, Y, and Z axes in the first three-axis acceleration sensor element 50a and was about 0.015 mV on the X and Y axes and about 0.01 mV on the Z axis in the second three-axis acceleration sensor element 50a'. When the output voltages were compared, the output voltage in the first three-axis acceleration sensor element 50a was about 200 times as larger as that in the second three-axis acceleration sensor element 50a'. When the output voltages are amplified at the same amplification ratio by an amplifier circuit and output voltages at a full scale are set the same, the measurement range of the first three-axis acceleration sensor element 50a is 1/200 of that of the second three-axis acceleration sensor element 50a'. For example, when the amplification ratio is set to 150 times and the full scale output voltage is set to ±900 mV, the measurement range is ±3 G in the first three-axis acceleration sensor element 50a and is ±600 G in the second three-axis acceleration sensor element 50a'. When accelerations of various intensities ranging from small acceleration equal to or smaller than 1 G to large acceleration of several hundred G were measured by such a multi-range three-axis acceleration sensor device, the accelerations could be measured with satisfactory linearity using the first three-axis acceleration sensor element 50a in the range of ±3 G and using the second three-axis acceleration sensor element 50a' in the range of ±600 G.

As shown in the example of dimensions described above, in order to set an output voltage per unit acceleration smaller in the second three-axis acceleration sensor element 50a' than the first three-axis acceleration sensor element 50a, it is desirable to shorten the beams, increase the width of the beams and increase the bending rigidity of the beams. It is also desirable to reduce the external dimension of the weight and reduce the weight of the weights. Consequently, it is desirable that the area in which the weight and the beams are arranged is smaller in the second three-axis acceleration sensor element 50a'. In other words, it is desirable that a space area in the frame decreases, i.e., a distance connecting connection points of the two beams with the frame decreases.

When the sensor elements had the dimension described above, a resonance frequency of the first three-axis acceleration sensor element 50a was about 1.5 kHz and a resonance frequency of the second three-axis acceleration sensor element 50a' was about 25 kHz. In the case of detection of impact acceleration, when oscillation near a resonance frequency of an acceleration sensor is applied to the acceleration sensor by impact collision of an apparatus mounted with the sensor, it is likely that the oscillation at the resonance frequency is not attenuated and remains to cause deficiency in a detection waveform. Therefore, in the impact detection, it is necessary to set the resonance frequency high. In the second three-axis acceleration sensor element 50a' that measures the high acceleration range, the bending rigidity of the beams is set high and the weight of the weight is set low and a resonance frequency of the sensor element is high. Thus, the second three-axis acceleration sensor element 50a' is suitable to be used for the impact detection.

When acceleration far exceeding the measurement range is applied to the first three-axis acceleration sensor element 50a that measures the low acceleration range, excess stress is applied to the beams to break the beams. Therefore, regulating plates were arranged above and below the weight of the sensor element at a certain space apart from each other. In this example, the IC regulating plate 3a as the IC chip on which a detection circuit was formed was arranged above the weight. The inner bottom of the case 1a was used as the regulating plate below the weight. It is possible to set the thickness of the entire sensor smaller than when an independent regulating plate is set separately from the IC regulating plate 3a and the case 1a. The space between the regulating plates and the weight is a space for preventing the weight from colliding with the regulating plates in the measurement range and allowing the weight to collide with the regulating plates before the beams are deformed to be broken. In this example, the space was set to 15 µm. In order to accurately form the space, plastic balls having a substantially fixed outer diameter were mixed in the first adhesives 16a and 16a' to make it possible to regulate the space with the plastic balls as a spacer. In the second three-axis acceleration sensor element 50a' having the large measurement range, the beams may not be broken even if assumed maximum acceleration is applied to the sensor element. In that case, the regulating plates do not have to be provided above and below the second three-axis acceleration sensor element 50a'. In other words, the IC regulating plate 3a may be arranged in an area that covers from above the first three-axis acceleration sensor element 50a and does not cover from above the second three-axis acceleration sensor element 50a'.

### EXAMPLE 2

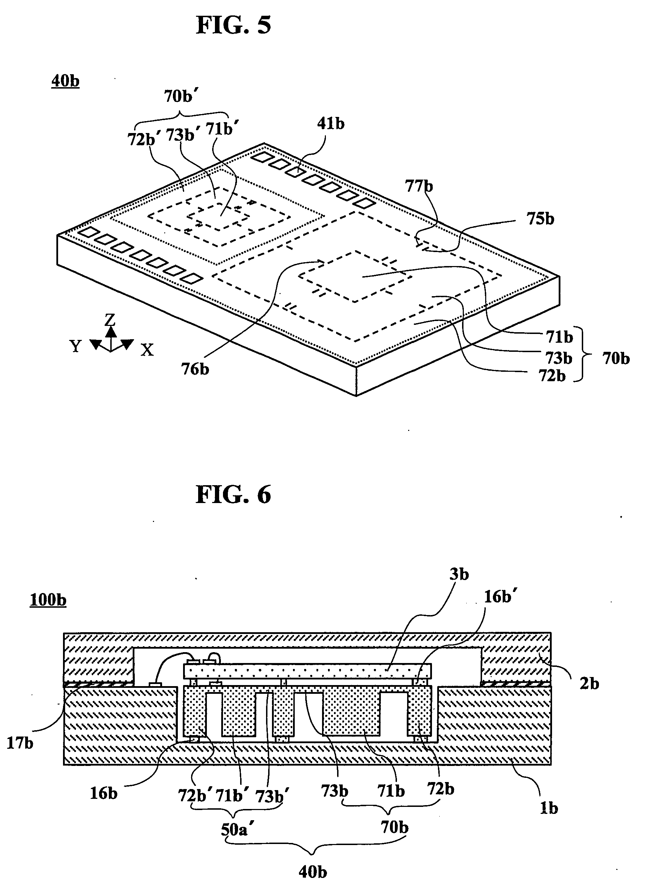

The multi-range three-axis acceleration sensor device according to EXAMPLE 2 of the present invention will be explained using FIGS. 4 to 6. FIG. 4 is an exploded perspective view of the multi-range three-axis acceleration sensor device according to EXAMPLE 2 and FIG. 5 is a perspective view of a multi-range sensor chip. FIG. 6 is a sectional view taken along the line VI-VI in FIG. 4. In FIG. 4, a multi-range three-axis acceleration sensor device 100b has the structure in which a multi-range sensor chip 40b having two diaphragm-type three-axis acceleration sensor elements formed thereon and an IC regulating plate 3b having a detection circuit formed thereon and having a role for regulating the movement of the sensor elements are set in a case 1b of alumina and sealed by a case cover 2b of alumina. Chip terminals 41b of the multi-range sensor chips 40b and IC terminals 31b of the IC regulating plate 3b as well as case terminals 12b connected to external terminals 11b of the case 1b and the IC terminals 31b are connected by lead wires 15b. Detection signals of the sensor are extracted from the external terminal 11b.

As shown in FIG. 6, the multi-range sensor chip 40b is fixed to an inner bottom of the case 1b using a first adhesive 16b. The first adhesive 16b is mixed with plastic balls. A certain space is formed between weights 71b and 71b' of the sensor elements and the inner bottom of the case 1b. The IC regulating plate 3b is bonded onto the multi-range sensor chip 40b by an adhesive 16b' also mixed with plastic balls. A certain space is formed between the weights 71b and 71b' of the sensor elements and the IC regulating plate 3b. The case cover 2b is bonded to the case 1b by a second adhesive 17b to seal the case 1b to form the multi-range three-axis acceleration sensor device 100b.

The structure of the multi-range sensor chip 40b will be explained using FIG. 5. A first diaphragm-type three-axis acceleration sensor element 70b and a second diaphragm-type three-axis acceleration sensor element 70b' are formed on the multi-range sensor chip 40b. In the diaphragm-type three-axis acceleration sensor elements 70b and 70b', the weights 71b and 71b' are supported in frames 72 and 72b' by flexible members 73b and 73b' of a diaphragm shape formed thinner than the frames 72b and 72b' and the weights 71b and 71b'. When an X axis and a Y axis are set in an upper surface of the multi-range sensor chip 40b and a Z axis is set in a direction perpendicular to the upper surface, X axis piezo resistors 75b for X axis direction acceleration detection are formed on the flexible member 73b along the X axis and Y axis piezo resistors 76b for Y axis direction acceleration detection are formed along the Y axis. Z axis piezo resistors 77b for Z axis acceleration detection may be formed in any of the axis directions. However, here, the Z axis piezo resistors 77b are formed along the X axis. Four piezo resistors are provided for each of the axes and are connected by not-shown wiring to form a bridge circuit. The weights are displaced by a force applied by acceleration and the flexible members are deformed, whereby an electric resistance of the piezo resistors changes. It is possible to detect the acceleration by extracting a potential difference due to the difference in the amount of resistance change among the four piezo resistors using the bridge circuit.

The second diaphragm-type three-axis acceleration sensor element 70b' has the same structure. However, the second diaphragm-type three-axis acceleration sensor element 70b' is formed on one frame side of the frame 72b of the first diaphragm-type three-axis acceleration sensor element 70b.

The second diaphragm-type three-axis acceleration sensor element 70b' has a small output voltage per unit acceleration compared with the first diaphragm-type three-axis acceleration sensor element 70b. In other words, the second diaphragm-type three-axis acceleration sensor element 70b' is set in a wider measurement range with respect to a full scale of an output voltage. For example, it is possible to set a measurement range of the first diaphragm-type three-axis acceleration sensor element 70b to ± several G and use the first diaphragm-type three-axis acceleration sensor element 70b for fall detection and set a measurement range of the second diaphragm-type three-axis acceleration sensor element 70b' to ± several hundred G and use the second diaphragm-type three-axis acceleration sensor element 70b' for impact detection. Plural chip terminals 41b are formed on the multi-range sensor chip 40b.

In the multi-range three-axis acceleration sensor device according to this example, it is possible to collectively form the first diaphragm-type three-axis acceleration sensor element 70b and the second diaphragm-type three-axis acceleration sensor element 70b' on one multi-range sensor chip 40b. Shapes of both the sensor elements are created on a mask for silicon dry etching to simultaneously machine and form the sensor elements. In this way, it is possible to form the two sensor elements having different measurement ranges without the addition of processes and it is possible to reduce manufacturing cost. Since the second diaphragm-type three-axis acceleration sensor element 70b' is formed within the frame 72b of the first diaphragm-type three-axis acceleration sensor element 70b, it is possible to commonly use frames of the two sensor elements and fit the sensor elements in a small area. Thus, it is possible to reduce a size of the multi-range three-axis acceleration sensor device. Further, since it is possible to adjust directions of the flexible members of the two sensor elements using mask patterns, it is possible to cause acceleration detection axes of the two sensor elements to highly accurately coincide with each other. The thicknesses of the frames 72b and 72b' and the weights 71b and 71b' of the first diaphragm-type three-axis acceleration sensor element 70b and the second diaphragm-type three-axis acceleration sensor element 70b' were set the same and the thicknesses of the flexible members 73b and 73b' of diaphragms were made the same.

In order to make an output voltage per unit acceleration smaller in the second diaphragm-type three-axis acceleration sensor element 70b' than the first diaphragm-type three-axis acceleration sensor element 70b, it is desirable to increase the width of the diaphragm of the second diaphragm-type three-axis acceleration sensor element, i.e., the distance between the weights and the frame and increase the bending rigidity of the diaphragm. It is also desirable to reduce the external dimensions of the weights and reduce the weight of the weights. Consequently, it is desirable that the area in which the weights and the flexible members of the second diaphragm-type three-axis acceleration sensor element 70b' are arranged is smaller. In other words, it is desirable that a space area in the frame decreases.

In the case of detection of impact acceleration, when oscillation near a resonance frequency of an acceleration sensor is applied to the acceleration sensor by impact collision of an apparatus mounted with the sensor, it is likely that the oscillation at the resonance frequency is not attenuated and remains to cause deficiency in a detection waveform. Therefore, in the impact detection, it is necessary to set the resonance frequency high. In the second diaphragm-type three-axis acceleration sensor element 70b' that measures the high acceleration range, the bending rigidity of the flexible members is set high and the weight of the weights is set low. Thus, a resonance frequency of the sensor element is high and the second diaphragm-type three-axis acceleration sensor element 70b' is suitable to be used for the impact detection.

When acceleration far exceeding the measurement range is applied to the first diaphragm-type three-axis acceleration sensor element 70b that measures the low acceleration range, excess stress is applied to the flexible members of the diaphragm shape to break the flexible members. Therefore, regulating plates were arranged above and below the weight of the sensor element at a certain space apart from each other. In this example, the IC regulating plate 3b as the IC chip on which a detection circuit was formed was arranged above the weights. The inner bottom of the case 1b was used as the regulating plate below the weights. It is possible to make the thickness of the entire sensor smaller than when an independent regulating plate is set separately from the IC regulating plate 3b and the case 1b. The space between the regulating plates and the weights is a space for preventing the weights from colliding with the regulating plates in the measurement range and allowing the weights to collide with the regulating plates before the flexible members are deformed to be broken. In order to accurately form the space, plastic balls having a substantially fixed outer diameter were mixed in the first adhesives 16b and 16b' to make it possible to regulate the space with the plastic balls as a spacer. In the second diaphragm-type three-axis acceleration sensor element 70b' having the large measurement range, the flexible members may not be broken even if assumed maximum acceleration is applied to the sensor element. In that case, the regulating plates do not have to be provided above and below the second diaphragm-type three-axis acceleration sensor element 70b'. In other words, the IC regulating plate 3b may be arranged in an area that covers from above the first diaphragm-type three-axis acceleration sensor element 70b and does not cover from above the second diaphragm-type three-axis acceleration sensor element 70b'.

### EXAMPLE 3

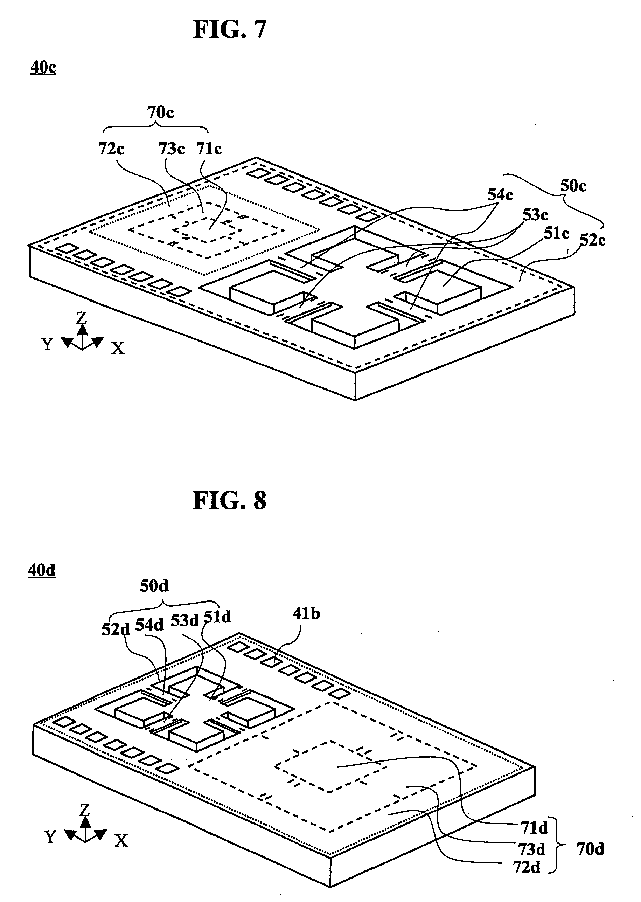

The multi-range three-axis acceleration sensor device according to EXAMPLE 3 of the present invention will be hereinafter explained. FIG. 7 is a perspective view showing a multi-range sensor chip 40c according to EXAMPLE 3. Instead of the first diaphragm-type three-axis acceleration sensor element 70b used for measuring the low acceleration range in EXAMPLE 2, a first beam-type three-axis acceleration sensor element 50c is used. The multi-range sensor chip 40c has the first beam-type three-axis acceleration sensor element 50c that measures the low acceleration range and the diaphragm-type three-axis acceleration sensor element 70c that measures the high acceleration range. The diaphragm-type three-axis acceleration sensor element 70c has the structure in which a weight 71c is supported by a diaphragm 73c in a frame 72c. In the beam-type three-axis acceleration sensor element 50c, a weight 51c is supported by two pairs of beams 53c and 54c in a frame 52c. On the beams 53c and 54c, as explained in EXAMPLE 1 with reference to FIG. 2, an X axis piezo resistor, a Y axis piezo resistor, and Z axis piezo resistor are provided. The diaphragm-type three-axis acceleration sensor element 70c is formed on one frame side of the frame 52c of the beam-type three-axis acceleration sensor element 50c. The thicknesses of the frames 52c and 72c and the weights 51c and 71c of the beam-type three-axis acceleration sensor element 50c that measured the low acceleration range and the diaphragm-type three-axis acceleration sensor element 70c that measured the high acceleration range were set the same. The thicknesses of the beams 53c and 54c and the diaphragm 73c as flexible members were set the same.

### EXAMPLE 4

The multi-range three-axis acceleration sensor device according to EXAMPLE 4 of the present invention will be hereinafter explained. FIG. 8 is a perspective view showing a multi-range sensor chip 40d according to EXAMPLE 4. Instead of the second diaphragm-type three-axis acceleration sensor element 70b' used for measuring the high acceleration range in EXAMPLE 2, a beam-type three-axis acceleration sensor element 50d is used in the multi-range sensor chip 40d. The multi-range sensor chip 40d has the first diaphragm-type three-axis acceleration sensor element 70d that measures the low acceleration range and the beam-type three-axis acceleration sensor element 50d that measures the low acceleration range. The diaphragm-type three-axis acceleration sensor element 70d has the structure in which a weight 71d is supported by a diaphragm 73d in a frame 72d. In the beam-type three-axis acceleration sensor element 50d, a weight 51d is supported by two pairs of beams 53d and 54d in a frame 52d. The beam-type three-axis acceleration sensor element 50d is formed on one frame side of the frame 72d of the diaphragm-type three-axis acceleration sensor element 70d. The thicknesses of the frames 52d and 72d and the weights 51d and 71d of the diaphragm-type three-axis acceleration sensor element 70d that measured the low acceleration range and the beam-type three-axis acceleration sensor element 50d that measured the high acceleration range were set the same. The thicknesses of the beams 53d and 54d and the diaphragm 73d as flexible members were set the same.

### EXAMPLE 5

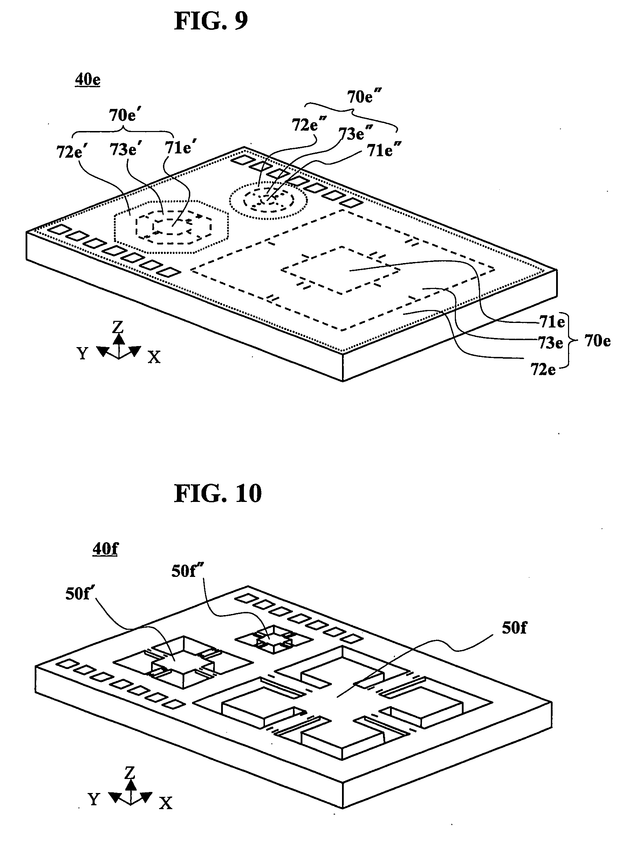

EXAMPLE 5 of the present invention is a multi-range three-axis acceleration sensor device that can detect, with an acceleration detection range further added, three-axis acceleration in three different acceleration ranges. The schematic structure of a multi-range sensor chip 40e is shown in a perspective view in FIG. 9. Within sides of a frame 72e of a fist diaphragm-type three-axis acceleration sensor element 70e, in addition to a second diaphragm-type three-axis acceleration sensor element 70e', a third diaphragm-type three-axis acceleration sensor element 70e" was arranged. The diaphragm-type three-axis acceleration sensor elements 70e, 70e', and 70e" had smaller output voltages per unit acceleration from the first to third in order and had larger acceleration measurement ranges in order. For example, the first diaphragm-type three-axis acceleration sensor element was set to ±3 G, the second diaphragm-type three-axis acceleration sensor element was ±30 G, and the third diaphragm-type three-axis acceleration sensor element was set to ±600 G. In order to make output voltages per unit acceleration smaller diaphragm-type three-axis acceleration sensor elements from the first to third in order, dimensions of weights were made smaller from the first to third in order and the lengths of flexible members were also made smaller.

In this example, the first diaphragm-type three-axis acceleration sensor element 70e has a square diaphragm, the second diaphragm-type three-axis acceleration sensor element 70e' has a polygonal diaphragm, and the third diaphragm-type three-axis acceleration sensor element 70e" has a circular diaphragm. Shapes of frames 72e, 72e', and 72e" and weights 71e, 71e', and 71e" are changed to match the shapes of the diaphragms. In this way, it is possible to select not only a square shape but also a polygonal shape and a circular shape. The thicknesses of the frames 72e, 72e', and 72e" and the weights 712e, 71e', and 71e" from the first to third diaphragm-type three-axis acceleration sensor elements were set the same and the thicknesses of the flexible members 73e, 73e', and 73e" thereof were set the same.

### EXAMPLE 6

EXAMPLE 6 of the present invention is a multi-range three-axis acceleration sensor device that can detect three-axis acceleration in three different acceleration ranges. A schematic structure of a multi-range sensor chip 40f is shown in FIG. 10. A second three-axis acceleration sensor element 50f and a third three-axis acceleration sensor element 50f" were arranged within frame sides of a first three-axis acceleration sensor element 50f, which was the same as the first three-axis acceleration sensor element in EXAMPLE 1. The three-axis acceleration elements have smaller output voltages per unit acceleration from first to third in order. The three-axis acceleration elements have larger acceleration measurement ranges from the first to third in order. For example, the first three-axis acceleration sensor element is set to ±3 G, the second three-axis acceleration sensor element is ±30 G, and the third three-axis acceleration sensor element is set to ±600 G. In order to make output voltages per unit acceleration smaller three-axis acceleration sensor elements from the first to third in order, dimensions of weights were made smaller from the first to third in order and the lengths of beams were set to be smaller or the widths thereof are set to be larger.

### EXAMPLE 7

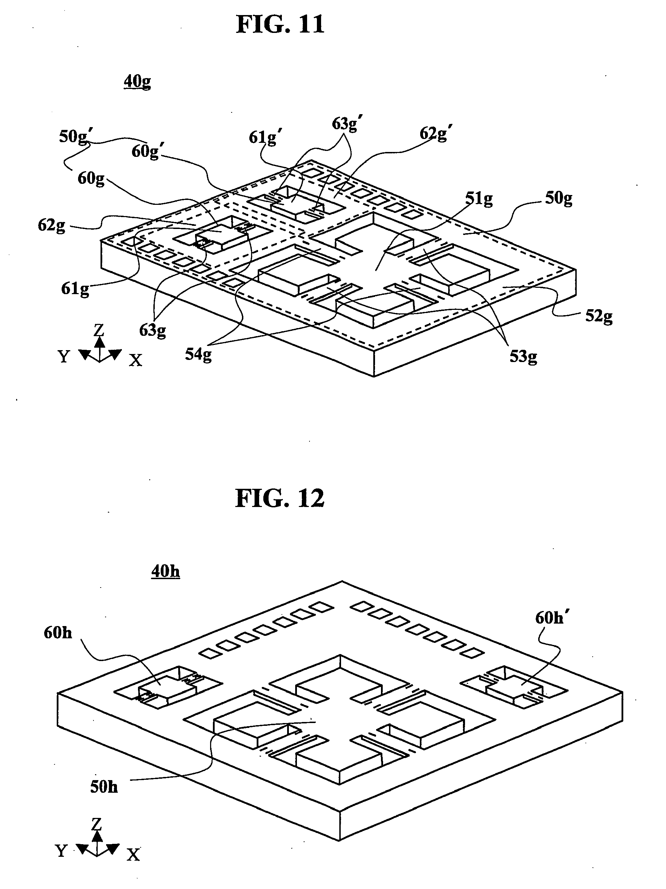

A multi-range three-axis acceleration sensor device according to EXAMPLE 7 will be explained. FIG. 11 shows the structure of a multi-range sensor chip 40g of EXAMPLE 7 in a perspective view. A second three-axis acceleration sensor element 50g' includes two two-axis acceleration sensor elements 60g and 60g'. As shown in EXAMPLE 1, the multi-range sensor chip 40g has a first three-axis acceleration sensor element 50g that has the structure in which a first element weight 51g is supported by first element first beams 53g and first element second beams 54g of respective two beams within a first element frame 52g. On the other hand, a second three-axis acceleration sensor element 50g' included a first two-axis acceleration sensor element 60g that had the structure in which a second first weight 61g was supported by second first beams 63g of two beams in a second element first frame 62g and a second two-axis acceleration sensor element 60g' that had the structure in which a second element second weight 61g' was supported by second element second beams 63g' within a second element second frame 62g'.

The two-axis acceleration sensor element is different from the three-axis acceleration sensor element in that the two-axis acceleration sensor element has beams forming a pair. It is possible to detect acceleration on a first axis (an X axis) in the direction in which the beams extend and a second axis (a Z axis) perpendicular to a chip plane with piezo resistors formed on the beams. Since the two two-axis acceleration sensor elements are arranged such that first axes thereof are orthogonal to each other, it is possible to detect three axes, i.e., two axes (X axis and Y axis), which are first axis direction of the two elements, and the Z axis. The detection of the Z axis can be performed by one of the two elements. In this example, the beams 63g of the first two-axis acceleration sensor element 60g was arranged along the X axis and an X axis piezo resistor and a Z axis piezo resistor were provided. The beams 63g' of the second two-axis acceleration sensor element 60g' were arranged along the Y axis and a Y axis piezo resistor was provided.

Since the two-axis acceleration sensor element has the pair of beams, bending rigidity of the beams as a whole is smaller that that of the three-axis acceleration sensor element having the two pairs of beams. Thus, it is possible to reduce dimensions of the weights to obtain the same output voltage per unit acceleration. Since the beams extend only in one direction, it is possible to fit the beams in a smaller frame. A total area of the two elements is larger than that of the three-axis acceleration sensor element. However, it is possible to reduce dimensions of the entire multi-range three-axis acceleration sensor device by providing two-axis elements in the second and subsequent acceleration sensor elements and arranging the acceleration sensor elements in the first three-axis acceleration sensor element having largest dimensions. In other words, it is possible to select whether three axes are provided in one first three-axis acceleration sensor element and three axes are provided the second and subsequent three-axis acceleration sensor elements, respectively, or two two-axis acceleration sensor elements are provided.

Schematic dimensions of the multi-range sensor chip according to EXAMPLE 7 will be described. The first three-axis acceleration sensor element 50g has the same size and the same structure as the first three-axis acceleration sensor element 50a in EXAMPLE 1. The first two-axis acceleration sensor element 60g and the second two-axis acceleration sensor element 60g' had the same dimensions. The length of beams thereof was set to 120 µm, the width thereof was set to 100 µm, and external dimension of weights was set to 150 µm×150 µm. In this case, an output voltage per acceleration 1 G at an input voltage of 3 V was about 2.0 mV on all the X, Y, and Z axes in the first three-axis acceleration sensor element and was about 0.01 mV on all the X, Y, and Z axes in the second three-axis acceleration sensor element. The first and second two-axis acceleration sensor elements could obtain an output voltage per unit acceleration equivalent to that of the second three-axis acceleration sensor element 50a' in EXAMPLE 1 with the weights having an area smaller than that of the conical shape weighs of the second three-axis acceleration sensor element 50a'. By arranging the first and second two-axis acceleration sensor elements having the dimensions described above as shown in FIG. 11, a size of the entire multi-range sensor chip could be reduced to be smaller than that in EXAMPLE 1.

### EXAMPLE 8

EXAMPLE 8 is the structure in which, as shown in FIG. 12, first and second two-axis acceleration sensor elements 60h and 60h' same as the first and second two-axis acceleration sensor elements in EXAMPLE 7 are arranged on two of frame sides of a first three-axis acceleration sensor element 50h. The first two-axis acceleration sensor element 60h having beams extending in an X direction was provided in frame sides parallel to an X axis of the first three-axis acceleration sensor element 50h. The second two-axis acceleration sensor element 60h' was provided in frame sides parallel to a Y axis of the first three-axis acceleration sensor element 50h. As dimensions of the entire first and second two-axis acceleration sensor elements 60h and 60h', a dimension in a longitudinal direction of the beams is long. This structure is desirable because it is possible to set a longer dimension as short as possible with respect to plane vertical and horizontal dimensions of the entire multi-range sensor chip 40h. In other words, when the multi-range sensor chip is formed in a substantially square shape, an area thereof is the smallest when the structure of this example is adopted.

### EXAMPLE 9

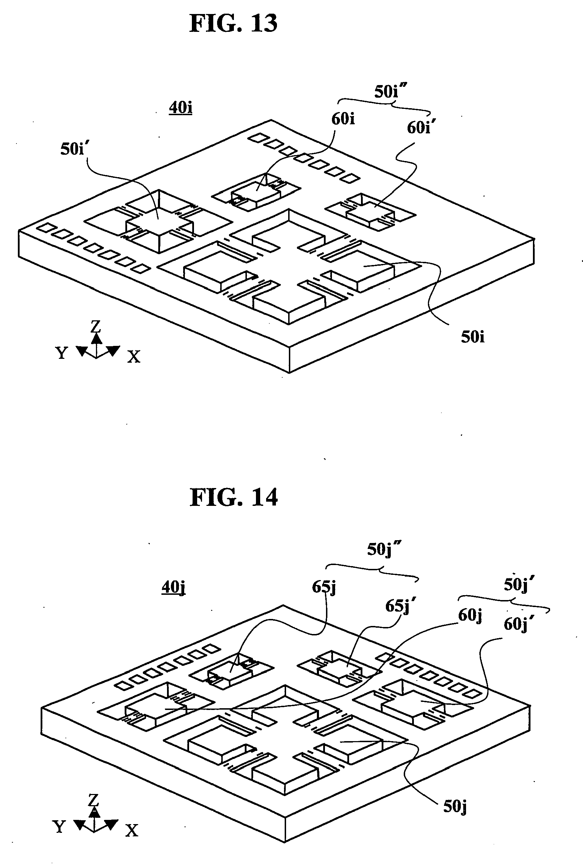

In the multi-range three-axis acceleration sensor device according to EXAMPLE 6 shown in FIG. 10, it is possible to constitute the second and third three-axis acceleration sensor elements 50f and 50f' from two two-axis acceleration sensor elements, respectively. For example, in a multi-range sensor chip 40i according to EXAMPLE 9, as shown in FIG. 13, a third three-axis acceleration sensor element 50i" included a first two-axis acceleration sensor element 60i that detected X and Z axis acceleration and a second two-axis acceleration sensor element 60i that detected Y axis acceleration. The first two-axis acceleration sensor element 60i was arranged in frame sides along an X axis of a first three-axis acceleration sensor element 50i together with a second three-axis acceleration sensor element 50i and the second two-axis acceleration sensor element 60i' was arranged in other frame sides along a Y axis.

### EXAMPLE 10

In a multi-range sensor chip 40j according to EXAMPLE 10 shown in FIG. 14, a second three-axis acceleration sensor element 50j' included a first two-axis acceleration sensor element 60j that detected X and Z axis acceleration and a second two-axis acceleration sensor element 60j' that detected Y axis acceleration. Similarly, a third three-axis acceleration sensor element 50j" included a third two-axis acceleration sensor element 65j that detected X and Z axis acceleration and a fourth two-axis acceleration sensor element 65j' that detected Y axis acceleration. First and third two-axis acceleration sensor elements 60j and 65j were arranged in frame sides along an X direction of a first three-axis acceleration sensor element 50j and second and fourth two-axis acceleration sensor elements 60j' and 65j' were arranged in frame sides along Y axis of a frame of the first three-axis acceleration sensor element 50j.

In the multi-range three-axis acceleration sensor device according to these examples, for accelerations of various intensities ranging from 1 G or less to several hundred G, the accelerations could be measured with satisfactory linearity using the three-axis acceleration sensor elements suitable for acceleration intensity.

### EXAMPLE 11

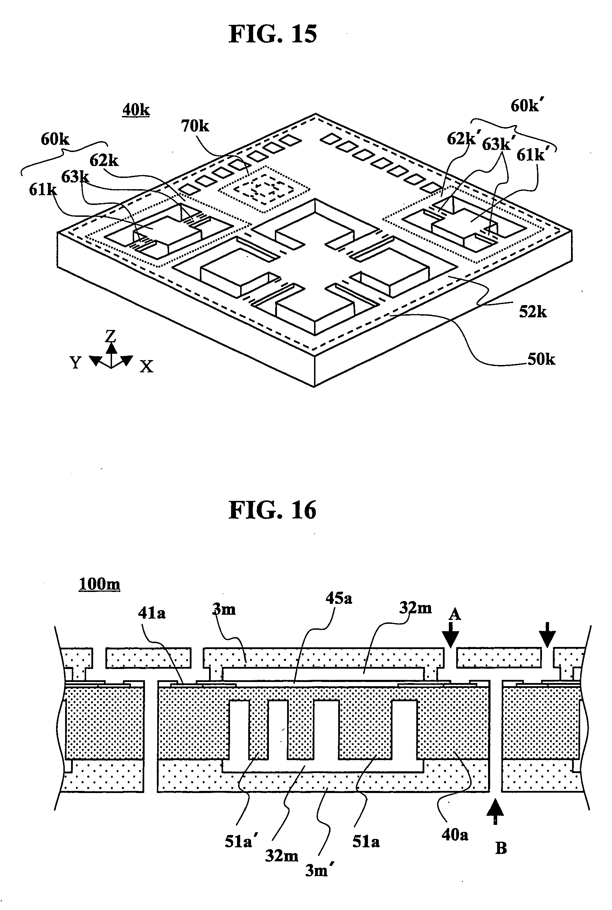

A multi-range three-axis acceleration sensor device according to EXAMPLE 11 of the present invention will be hereinafter explained. The structure of a multi-range sensor chip 40k according to EXAMPLE 11 is shown in a perspective view in FIG. 15. In this example, the multi-range sensor chip 40k includes the beam-type three-axis acceleration sensor element 50k that measures a low acceleration range, two beam-type two-axis acceleration sensors 60k and 60k' that measure a medium acceleration range, and the diaphragm-type three-axis acceleration sensor element 70k that measures a high acceleration range. In the beam-type two-axis acceleration sensors 60k and 60k', weights 61k and 61k' and frames 62k and 62k' are connected by pairs of beams 63k and 63k', respectively. A piezo resistor for an X axis and a piezo resistor for a Z axis were formed on the beams 63k of the beam-type two-axis acceleration sensor 60k. A piezo resistor for a Y axis was formed on the beam 63k' of the beam-type two-axis acceleration sensor 60k'. The diaphragm-type three-axis acceleration sensor element 70k and the two beam-type two-axis acceleration sensors 60k and 60k' were formed on two frame sides 52k of the beam-type three-axis acceleration sensor element 50k.

The beam-type two-axis acceleration sensor elements 60k and 60k' are different from the beam-type three-axis acceleration sensor element 50k in that the beam-type two-axis acceleration sensor elements 60k and 60k' have the pairs of beams 63k and 63k', respectively. It is possible to detect acceleration on a first axis (an X axis) in a longitudinal direction of the beams and acceleration on a second axis (a Z axis) perpendicular to a chip plane with the piezo resistors formed on the beams 63k and 63k'. Since the two two-axis acceleration sensor elements are arranged such that the first axes thereof are orthogonal to each other, it is possible to detect acceleration on three axes in total, i.e., two axes (X axis and Y axis) extending in axis directions in which the beams of the two elements extend, respectively, and the Z axis. The detection of Z axis acceleration may be performed by one of the two elements or may be performed by both the elements. In this example, the beams 63k of the first beam-type two-axis acceleration sensor element 60k were arranged along the X axis and an X axis piezo resistor and a Z axis piezo resistor are formed. The beam 63k' of the second beam-type two-axis acceleration sensor element 60k' was arranged along the Y axis and a Y axis piezo resistor was formed.

Since the beam-type two-axis acceleration sensor element has the pair of beams, bending rigidity of the beams as a whole is smaller that that of the beam-type three-axis acceleration sensor element having the two pairs of beams. Thus, it is possible to reduce dimensions of the weights to obtain the same output voltage per unit acceleration. Since the beams extended only in one direction, the beams could be fit within a smaller frame.

### EXAMPLE 12

In a multi-range three-axis acceleration sensor device according to EXAMPLE 12, wafer level packaging is applied to an outer side of the sensor element forming area of the multi-range sensor chip 40a explained in EXAMPLE 1. The multi-range three-axis acceleration sensor device according to EXAMPLE 12 is shown in cross-sectional views in FIGS. 16 and 17. As shown in FIG. 16, a first cap 3m and a second cap 3m' were bonded above and below the multi-range sensor chip 40a. The first cap 3m and the second cap 3m' have a cavity 32m in the center thereof and are bonded to the multi-range sensor chip 40a in peripheral portions thereof. Since bonding portions are arranged on the outer side of the sensor element forming area of the multi-range sensor chip 40a, a sensor element is protected in a hermetically sealed package surrounded by the first cap 3m and the second cap 3m' such that a characteristic of the sensor element does not fluctuate because of influence by humidity, foreign matters, and the like.

Appropriate spaces are provided between the weights 51a and 51a' of the sensor element and the first cap 3m and the second cap 3m' to play a role of regulating plates that regulate displacement of the weights and prevent breakage of the beams when excess acceleration is applied. A chip protection film 45a is formed on an upper surface of the multi-range sensor chip 40a. Wiring connecting a chip terminal 41a arranged on the outside of the hermetically sealed package and piezo resistors is drawn out to the outside of the hermetically sealed package through below the chip protection film 45a. The first cap 3m and the second cap 3m' were formed of silicon wafer and the cavity 32m was machined by anisotropic etching or dry etching of silicon. The bonding of the multi-range sensor chip 40a and the first cap 3m and the second cap 3m' was performed in a state of wafer. After the bonding, the multi-range sensor chip 40a and the first cap 3m and the second cap 3m' were integrated into one piece of an individual sensor chip package 100m. Solder of AuSn was used for the bonding. Besides, it is also possible to use soldering and eutectic bonding of various kinds of metal, surface activation bonding, anodic bonding, low-melting glass bonding, and the like. In integrating the multi-range sensor chip 40a and the first cap 3m and the second cap 3m' into one piece, it is necessary to expose a chip electrode. Thus, in the first cap, a cavity was formed in an upper area of the chip electrode and only the first cap 2m was cut by a first dicing unit A to expose chip electrodes 41a. Thereafter, the multi-range sensor chip 40a and the second cap 3m' were cut by a second dicing unit B and integrated into one piece.

Since the sensor element is protected in the hermetically sealed package, as a package of the entire sensor, it is possible to adopt an inexpensive plastic package generally used. An example of the structure in which a metal lead frame and resin sealing is shown in FIG. 17. An IC chip 80 was bonded onto a chip supporting plate 78 of a metal lead frame 85 by a first adhesive 79 of resin and the sensor chi package 100m was bonded onto the IC chip 80 by a second adhesive 81 made of resin. The chip electrodes 41a of the sensor chip package 100m and IC terminals 82 of the IC chip 80 were connected by wires 15 made of Au. The IC terminals 82 and external terminals 83 of the metal lead frame 85 were also connected by the wires 15. Then, these were sealed by sealing resin 84 of epoxy. Here, the multi-range sensor chip explained in EXAMPLE 1 is used. However, it is also possible to use those explained in EXAMPLES 2 to 11.

## Claims

1. A multi-range three-axis acceleration sensor device (100a) comprising a plurality of three-axis acceleration sensor elements formed in a single silicon chip (40a),
each of the plurality of three-axis acceleration sensor elements (50a, 50a') comprising a weight (51a, 51a'),
a frame (52a, 52a') surrounding the weight and having frame sides opposite to each other,
flexible members (53a, 54a; 53a', 54a') thinner than the weight (51a, 51a') and the frame (52a, 52a'), which members connect upper portions of the opposite frame sides with an upper portion of the weight to support the weight between the upper portions of the opposite frame sides, and
piezo resistors (55a, 56a, 57a) disposed on an upper surface of the flexible members to measure accelerations in two orthogonal axis directions in the upper surface of the flexible members and acceleration in a direction vertical to the upper surface of the flexible members,
wherein the plurality of three-axis acceleration sensor elements (50a, 50a') include a first three-axis acceleration sensor element (50a), in the frame (52a) of which other three-axis acceleration sensor elements (50a') are provided,
each of the plurality of three-axis acceleration sensor elements (50a, 50a') causes output voltage for unit acceleration different from another, and
the output voltage for unit acceleration from the first three-axis acceleration sensor element (50a) is larger than output voltage for unit acceleration from another (50a').

2. A multi-range three-axis acceleration sensor device as set forth in claim 1, wherein a three-axis acceleration sensor element (50a) having larger output voltage for unit acceleration has a longer distance between the opposite frame sides.

3. A multi-range three-axis acceleration sensor device as set forth in claim 1, wherein each of the plurality of three-axis acceleration sensor elements (50a, 50a') has the flexible members (53a, 54a; 53a', 54a') of the same thickness as another.

4. A multi-range three-axis acceleration sensor device as set forth in claim 1, wherein each of the plurality of three-axis acceleration sensor elements (50a, 50a') has the weight of the same thickness as another.

5. A multi-range three-axis acceleration sensor device as set forth in claim 1 or 4,
wherein each of the plurality of three-axis acceleration sensor elements (50a, 50a') has the frame (52a, 52a') of the same thickness as another:

6. A multi-range three-axis acceleration sensor device as set forth in claim 1, wherein at least one of the plurality of three-axis acceleration sensor elements (50a, 50a') has a plurality of beams connecting the upper portions of the opposite frame sides with the upper portion of the weight as the flexible members, and the rest of the plurality of three-axis acceleration sensor elements has, as the flexible members, a diaphragm disposed in a region surrounded by an upper portion of its frame and supporting the weight in a center of the diaphragm.

7. A multi-range three-axis acceleration sensor device as set forth in claim 6, wherein all of the beams and diaphragms of the plurality of three-axis acceleration sensor elements (50a, 50a') have the same thickness.

8. A multi-range three-axis acceleration sensor device as set forth in claim 7, wherein all of the weights and the frames of the plurality of three-axis acceleration sensor elements have the same thickness.

9. A multi-range three-axis acceleration sensor device as set forth in claim 6, wherein the first three-axis acceleration sensor element has a plurality of beams connecting the upper portions of the opposite frame sides with the upper portion of the weight as the flexible members.

10. A multi-range three-axis acceleration sensor device as set forth in claim 9, wherein a three-axis acceleration sensor element having larger output voltage for unit acceleration has longer beams.

11. A multi-range three-axis acceleration sensor device as set forth in claim 9, wherein a three-axis acceleration sensor element having larger output voltage for unit acceleration has narrower beams.

12. A multi-range three-axis acceleration sensor device as set forth in claim 6, wherein the first three-axis acceleration sensor element has, as the flexible members, the diaphragm disposed in the region surrounded by the upper portion of its frame and supporting the weight in the center of the diaphragm.

13. A multi-range three-axis acceleration sensor device as set forth in claim 1, wherein each of the plurality of three-axis acceleration sensor elements has a plurality of beams connecting the upper portions of the opposite frame sides with the upper portion of the weight as the flexible members.

14. A multi-range three-axis acceleration sensor device as set forth in claim 1, wherein each of the plurality of three-axis acceleration sensor elements has, as the flexible members, a diaphragm disposed in a region surrounded by an upper portion of its frame and supporting a weight in a center of the diaphragm.

15. A multi-range three-axis acceleration sensor device as set forth in claim 1, wherein at least one of the other three-axis acceleration sensor elements is composed of two two-axis acceleration sensor elements, each of which comprises a weight, a frame surrounding the weight and having frame sides opposite to each other, a pair of beams thinner than the weight and the frame, and piezo resistors formed on the beams and extending in a direction of the beams extending,
the directions of the beams extending of the two two-axis acceleration sensor elements are perpendicular to each other in an upper surface of the beams,
one of the two two-axis acceleration sensor elements measures acceleration in the direction of the beams extending in the upper surface of the beams and acceleration vertical to the upper surface of the beams, and
the other of the two two-axis acceleration sensor elements measures at least acceleration in the direction of the beams extending in the upper surface of the beams.
